(19)

Europäisches Patentamt
European Patent Office
Office européen des brevets

(11) **EP 3 333 771 A1**

(12) **EUROPEAN PATENT APPLICATION**

(43) Date of publication:
**13.06.2018 Bulletin 2018/24**

(51) Int Cl.:
**G06K 9/68** *(2006.01)*   **G06K 9/62** *(2006.01)*

(21) Application number: **16203305.4**

(22) Date of filing: **09.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **FUJITSU LIMITED**
**Kawasaki-shi Kanagawa 211-8588 (JP)**

(72) Inventor: **HU, Bo**
**Winchester, Hampshire SO23 7DT (GB)**

(74) Representative: **Fenlon, Christine Lesley**
**Haseltine Lake LLP**
**Lincoln House, 5th Floor**
**300 High Holborn**
**London WC1V 7JH (GB)**

(54) **METHOD, PROGRAM, AND APPARATUS FOR COMPARING DATA HYPERGRAPHS**

(57)   In a computer-implemented method of computing a similarity value between first and second portions of hypergraph data, each portion comprising a plurality of vertices and a plurality of edges and being represented as an adjacency matrix, where each vertex in the respective portion of hypergraph data is assigned a unique position in a row of the adjacency matrix and a unique position in a column of the adjacency matrix, and cells of the adjacency matrix each contain a set of edges corresponding to the vertex represented by the cell a transformation process is used to generate respective first and second images from the first and second portions of hypergraph data. The process comprises, for each portion, encoding each cell of the adjacency matrix representing the portion as a colour by: allocating a set of pixel values respectively representing a colour to each edge such that each edge has a different set of pixel values to the other edges, and specifying the colour of each cell of the adjacency matrix as an overlay, by either addition or subtraction, of the colours of each edge in the set of edges in that cell.

FIG. 5

**Description**

The present invention lies in the field of data analysis. In particular, the invention relates to comparison of data hypergraphs.

Data graphs are complex, and performing comparisons of two data graphs or two portions of graph data is computationally expensive. Comparisons of data graphs are therefore either not performed, delayed until system idle time, or performed at significant performance cost to a computer or computer network executing the comparison. A multitude of technological applications of data graph comparisons are not realised due to the computational expense.

Graph similarity computation is hard and computationally expensive. Thus far, one of the following approaches is taken: given graphs $G_1$ and $G_2$

1. Brute force: iterating all vertices and edges to compare two graphs
2. Graph edit distance: assign numeric values to operations that transform graph $G_1$ into $G_2$. The overall similarity is the aggregation of all the operations. This approach can still have high complexity and grow exponentially with the size of the graphs.
3. Feature extraction: based on a predefined list of features, compute values of such features of $G_1$ and $G_2$. Domain heuristics sometimes used in feature extraction.

In general, existing approaches suffer from computational complexity or the complexity and arbitrariness of feature selection.

The inventor has proposed some improvements in graph similarity computation in United Kingdom patent application no. 1609871.7 and German patent application no. 102016209932.9, the contents of both of which are hereby incorporated by reference.

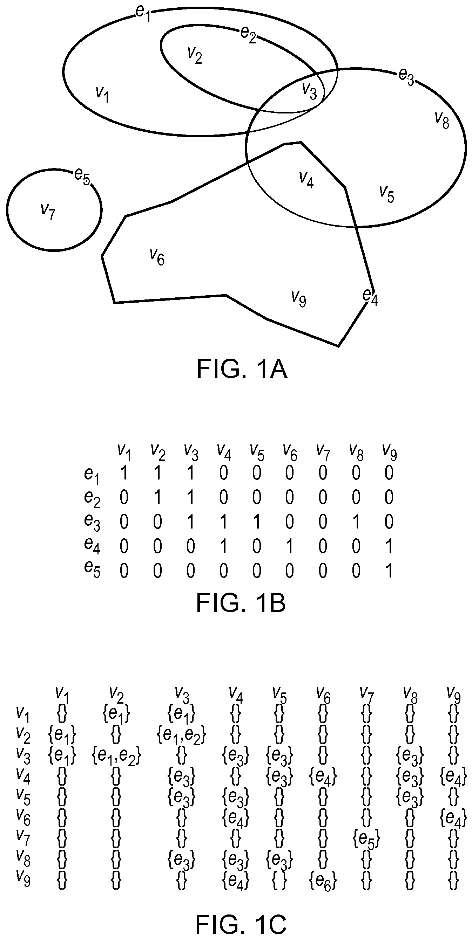

A hypergraph is a tuple <V, E> where V is a finite set of entities (potentially accompanied with vertex labels) and E is a finite set of relations $e \in 2^V/\phi$ (with or without edge weights). Hypergraph edges are elements of the power set of vertices minus empty set. Edges can be either directed (pointing from the first vertex $a$ to the second vertex $b$ in the sense of normal graphs) or undirected. An example of a hypergraph is illustrated in Figure 1A of the accompanying drawings.

The hypergraph of Figure 1A contains vertices $\{v_1,v_2,v_3,v_4,v_5,v_6,v_7,v_8,v_9\}$ while edges are $\{e_1,e_2,e_3,e_4,e_5\}$, where $e_1 = \{v_1,v_2,v_3\}$, $e_2 = \{v_2,v_3\}$, $e_3 = \{v_3,v_4,v_5,v_6\}$, $e_4 = \{v_4,v_6,v_9\}$, and $e_5 = \{v_7\}$.

Examples of hypergraphs can be found in many applications, for instance (but not limited to) the interactions between genomes and their functionalities, natural borders of countries and regions, and food webs where vertices are species and edges connecting species with common prey.

In order to design medicines or therapies targeting a particular genomic functionality (or abnormality), it is necessary to align the genomic functionalities and genomic structures affected by chemical compounds with those that are underpinning observable signs or symptoms.

When modelling genome functionalities, there are often single relationships connecting multiple functionalities, genomes structures, etc. A hypergraph is necessary to faithfully model the domain of discourse.

Hypergraph similarity algorithms take two hypergraphs and compute how similar the two hypergraphs are. The similarity is normally represented as a number between 0 and 1. In some cases, instead of the entire hypergraphs, only portions of the graph data are used in similarity computation. Computation of hypergraph similarity can provide mathematical evaluation of the degree of topological change over a known set of vertices.

Currently, hypergraph similarity comparison is done through reductionist approaches: either the domain is modelled as a "normal" graph or the hypergraph model is converted to a bipartite "normal" graph; in each case existing graph similarity methods for normal graphs can be applied as discussed above.

However, when applying methods based on normal graphs to the computation of hypergraph similarity, there is knowledge loss when reducing the hyper-relations to binary-relations, in addition to added computational complexity and semantic ambiguity.

It is desirable to devise a less computationally expensive and more scalable technique for comparing data hypergraphs which mitigates knowledge loss.

According to an embodiment of a first aspect of the present invention there is provided a computer-implemented method, comprising:

applying a transformation process to: a first portion of graph data to generate a first image, and a second portion of graph data to generate a second image;
applying an extracting process to: the first image to extract a first feature vector, and the second image to extract a second feature vector; wherein both the first feature vector and the second feature vector comprise quantifiable values for each of a common set of features;

computing a similarity value, the similarity value being a value representing the similarity between the first feature vector and the second feature vector based on the respective quantifiable values for the common set of features; and outputting the computed similarity value;
wherein:

the first and second portions of graph data include portions of hypergraph data each comprising a plurality of vertices and a plurality of edges;
during or at the start of the transformation process each portion of graph data is represented as an adjacency matrix, where each vertex in the respective portion of graph data is assigned a unique position in a row of the adjacency matrix and a unique position in a column of the adjacency matrix, and cells of the adjacency matrix each contain a set of edges corresponding to the vertex represented by the cell; and
for each portion of hypergraph data the transformation process comprises encoding each cell of the adjacency matrix representing the portion of hypergraph data as a colour by:

allocating a set of pixel values respectively representing a colour to each edge such that each edge has a different set of pixel values to the other edges,
and
specifying the colour of each cell of the adjacency matrix as an overlay, by either addition or subtraction, of the colours of each edge in the set of edges in that cell.

In embodiments of the present invention hypergraphs are converted into images and the images are compared to provide an indication of the degree of similarity between the images, and hence also the similarity between hypergraphs. Large graph matching can be easily distributed to take full advantage of parallel processing.

Procedures that require comparisons of hypergraph data can be performed in a manner which is computationally efficient and which includes intermediate representations of the hypergraph data that can be usefully stored for future comparisons. Embodiments utilise the principle of summarising complex data into a simplified format for comparison, in a specific manner which is particularly effective in the field of comparing hypergraph data.

The images are manifest as image data, so it may be that the extracting process is considered to be applied to the image data. The image data may be a tuple of <position, pixel value> for a two-dimensional array of pixels.

The image data may also include metadata, for example, an ID assigned to the portion of hypergraph data.

Embodiments of the invention assess hypergraph similarity using multi-channel image similarity, leveraging the recent advances in image classification based on deep neural network computing. The potential benefits provided are:

1. Similarity values are mathematically grounded, allowing clear semantics
2. Similarity values are distortion tolerant
3. High run-time computational efficiency: once trained, the similarity computation can be carried out with high scalability and high efficiency

Embodiments of the present invention can be applied to many different areas. The following are exemplar applications:

1. Multi-way modelling of genomic functionalities, where genomes and their corresponding functionalities can be modelled using hypergraphs. In this case the hypergraphs would model: 1) signs and symptoms, genomic structures, genomic functionalities, and 2) chemical compounds, genomic structures that chemical compounds can affect, and genomic functionalities that are associated with specific structures. The genomic functionality hypergraph from different input threads would be matched, and the best matches between chemical compounds and signs/symptoms would be found and output to end users as candidates for developing targeted medicine. Although a bipartite graph could be used instead of a hypergraph for this application, better computational characteristics are provided by using hypergraphs.
2. Alignment of Resource Description Framework (RDF) models with triple reification. The reified RDF model is a hypergraph which cannot be easily converted to bipartite graphs. The underlying hypergraph model will not be based on arbitrary graph edge labels (as RDF predicates).
3. Modelling of telephone or email communications, for example in trading networks, to detect patterns of communication activity which are similar to each other or to a pattern of interest, or to detect abnormal activity dissimilar to a normal pattern. In the case of trading networks, an email thread may involve multiple senders and recipients. A contract may involve multiple suppliers and buyers. A hypergraph can easily model the n-ary relationships among individuals. By matching such hypergraphs with known patterns, a graph similarity system can detect and identify high risk graph components (e.g. misconduct in system usage, suspicious trading transactions). Such high risk subgraphs can then be flagged and sent to end users of the system (e.g. system administration, and auditing personnel) for further investigation.

Optionally, a method embodying the present invention may further comprise comparing the computed similarity value with a predetermined similarity threshold value and, on the basis of the result of the comparison, determining whether an alert indicating the comparison result should be issued, and if so issuing such an alert. For example, where the first and second portions of hypergraph data model respective patterns of activity, an alert may be issued if the result of the comparison indicates that the computed similarity value is lower than the predetermined similarity threshold, i.e. it is deemed that a dissimilarity with a particular pattern of activity has been detected, or if the computed similarity value meets or exceeds the predetermined similarity threshold, i.e. it is deemed that a similarity with a particular pattern of activity has been detected.

Alternatively, the first portion of hypergraph data may model at least one of: (i) an observable sign of genomic functionality; (ii) a symptom of genomic abnormality; (iii) genomic structure; and (iv) genomic functionality; and the second portion of hypergraph data may model at least one of: (i) a chemical compound; (ii) a genomic structure that can be affected by a chemical compound; and (iii) a genomic functionality associated with a genomic structure. In this case a method embodying the present invention may further comprise identifying, based on the computed similarity value, a chemical compound which is a candidate for use in development of a treatment targeted for a specific genomic functionality or abnormality, and manufacturing the candidate chemical compound.

Optionally, where the plurality of edges comprise edges weighted according to a range of edge weights, allocating a set of pixel values to each edge may comprise allocating a set of pixel values to each edge according to its edge weight.

Colour counters may be used to store a pixel value count for the colours red, green and blue respectively, and an order for the colour counters and a counter increment step may be predefined. The counter increment step may be predefined on the basis of the total number of edges and the range of edge weights.

Allocating a set of pixel values to each edge according to its edge weight may comprise carrying out the pixel value increment process of: for each weight in the range of edge weights, incrementing the pixel value count in the first colour counter by the predefined increment step unless the count in the first colour counter has reached a first preset maximum pixel value, in which case incrementing the pixel value count in the second colour counter by the predefined increment step unless the count in the second colour counter has reached a second preset maximum pixel value, in which case incrementing the pixel value count in the third colour counter by the predefined increment step until the count in the third colour counter reaches a third preset maximum pixel value.

Alternatively, or in addition, allocating a set of pixel values to each edge according to its edge weight may comprise carrying out the pixel value increment process of: for each weight in the range of edge weights, incrementing each of the pixel value counts in the colour counters in turn by the predefined increment step.

Alternatively, or in addition, allocating a set of pixel values to each edge according to its edge weight may comprise carrying out the pixel value increment process of: representing each of the colours red, green and blue as an **m** bits integer, where m is a positive integer selected based on a maximum pixel value for each colour, interlacing the bits representing each colour in turn in the predefined colour counter order so as to create a 3 times **m** bits binary number, and, for each edge weight in the range of edge weights, incrementing the 3 times **m** bits binary number by the predefined increment step.

Where each of the plurality of vertices represents an entity, in the adjacency matrices respectively representing the first and second graph portions, pairs of vertices, with one vertex from each of the first and second portions of graph data, which represent the same entity are assigned to equivalent unique positions in the respective adjacency matrices.

The extraction process extracts a feature vector from the first image and a feature vector from the second image. The extraction process may comprise applying an artificial neural network to the respective image to extract the feature vector. In particular, the extracting process may comprise applying a convolutional neural network to the respective image to extract the respective feature vector.

The convolutional neural network may also be referred to as a convolutional neural network model. Specifically, the convolutional neural network model may be an image classification neural network model. Applying a convolutional neural network is forward propagating the convolutional neural network using the respective image as input. The convolutional neural network is applied to the entirety of the respective images.

Advantageously, convolutional neural networks are a specialised form of neural network especially effective in the field of image classification. Embodiments provide a mechanism to leverage the convolutional neural network model in the field of graph data, by transforming the graph data to image data.

Optionally, embodiments may comprise, or be suitable for: training an image classification convolutional neural network model, and storing the trained image classification convolutional neural network model as the convolutional neural network, the training comprising: obtaining a training set of image pairs, and for image pair from among the training set of image pairs, obtaining a corresponding target similarity value; and for each image pair from among the training set image pairs, in turn: extracting a feature vector from each of the pair of images by executing the image classification neural model on the respective images, computing a similarity value representing the similarity between the two feature vectors, and, if there is a difference between the computed similarity value and the target similarity value, performing backward error propagation to modify the image classification neural model to reduce the difference, wherein the extracting, computing, and backward error propagation are performed iteratively until either a predefined maximum number of iterations is reached or the difference falls below a threshold value.

The training procedure may be a backward error propagation procedure, in which the difference between the computed similarity value generated by the feature vectors extracted by the image classification neural model and the target similarity value for a pair of images is minimised by adapting parameters in the convolutional layers of the image classification neural model, such as weighting factors and bias factors, or other modification processes at each layer of the model, based on the gradient of the difference with respect to the adaptable factors. It may be that the training procedure is also used to adapt weighting factors of input nodes other than temporal processor nodes. However, embodiments of the present invention are not limited by the particular training procedure employed.

For example, it may be that the training set image pairs are pairs of images generated by obtaining sample portions of graph data, and performing the transformation process on the sample portions of graph data, to obtain sample image data. Obtaining a corresponding target similarity value may be a process of executing an existing graph similarity computation on the sample portions of graph data, with the similarity value so obtained (possibly subject to scaling), being set as the target similarity value. The existing graph similarity computation may be a brute force computation (iterate through all vertices and edges to compare the two graphs), or a graph edit distance (assign numeric values to operations that transform one sample portion into another, the overall similarity is the aggregation of all the operations). Advantageously, the computationally expensive existing graph similarity procedures are executed as part of the training, so that the convolutional neural network model, which is less computationally expensive to execute, can be trained for future executions. In other words, the training procedure may be computationally expensive, and intentionally so in order that appropriate target similarity values are used, with the payoff being that, once trained, future comparisons of graph data can be performed using the less computationally expensive trained convolutional neural network to compare images into which the graph data has been transformed.

As a further alternative, obtaining the training set of image pairs may comprise downloading image pairs from an image repository. Or, obtaining the training set of image pairs may comprise: generating a set of original raster images; and for each of the set of original raster images, producing one or more new images by editing the original raster image, the editing including rotating and/or random pixel value editing, adding the original raster image with each of the one or more new images to the training set of image pairs. In such a case, obtaining the target similarity value for each of the image pairs may comprise quantifying a degree of the editing performed to obtain the new image from the original image in the pair, and representing the degree of editing in the target similarity value.

In other words, an edit distance between the two images is calculated, wherein numeric values are assigned to operations that transform the original image into the new image, and the target similarity value is the aggregation of all the operations.

According to an embodiment of a second aspect of the present invention there is provided an apparatus comprising:

a transformation processor to apply a transformation process to: a first portion of graph data to generate a first image, and a second portion of graph data to generate a second image;
an extraction processor to apply an extraction process to: the first image to extract a first feature vector, and the second image to extract a second feature vector; wherein both the first feature vector and the second feature vector comprise quantifiable values for each of a common set of features;
a similarity value computer to compute a similarity value, the similarity value being a value representing the similarity between the first feature vector and the second feature vector based on the respective quantifiable values for the common set of features; and
an outputter to output the computed similarity value;
wherein:

the first and second portions of graph data include portions of hypergraph data each comprising a plurality of vertices and a plurality of edges;
during or at the start of the transformation process each portion of graph data is represented as an adjacency matrix, where each vertex in the respective portion of graph data is assigned a unique position in a row of the adjacency matrix and a unique position in a column of the adjacency matrix, and cells of the adjacency matrix each contain a set of edges corresponding to the vertex represented by the cell; and
for each portion of hypergraph data the transformation process comprises encoding each cell of the adjacency matrix representing the portion of hypergraph data as a colour by:

allocating a set of pixel values respectively representing a colour to each edge such that each edge has a different set of pixel values to the other edges, and

specifying the colour of each cell of the adjacency matrix as an overlay, by either addition or subtraction, of the colours of each edge in the set of edges in that cell.

Optionally, apparatus embodying the present invention may further comprise a comparator to compare the computed similarity value with a predetermined similarity threshold value and, on the basis of the result of the comparison, determine whether an alert signal indicating the comparison result should be issued, and if so issuing such an alert signal.

Embodiments may include software, such as a computer program, which when executed by a computing apparatus, causes the computing apparatus to perform a method embodying the present invention. Such a computing apparatus may be a computing device, such as a server or other computer, or may be a network of interconnected computing devices operating in collaboration with one another. The software or computer program may be stored on a computer readable medium. The computer readable medium may be a non-transitory computer-readable medium.

A detailed description of embodiments will now be provided with reference to the accompanying drawings, in which:

Figure 1A illustrates a visualisation of a portion of hypergraph data;
Figure 1B illustrates an exemplary encoding of the hypergraph data of Figure 1A;
Figure 1C illustrates an adjacency matrix corresponding to the encoded hypergraph data of Figure 1 B;
Figure 2 is a schematic diagram illustrating the flow of processing in an embodiment;
Figure 3 illustrates an apparatus of an embodiment;
Figure 4 illustrates an exemplary system architecture underlying an apparatus of an embodiment;
Figure 5 illustrates a method of an embodiment;
Figure 6 illustrates a visualisation of a colour-coded adjacency matrix generated by an embodiment;
Figure 7 illustrates a system of an embodiment; and
Figure 8 illustrates an example of a convolutional neural network model.

When computing similarity between two hypergraphs, it is assumed that there is a way to establish the alignment between the vertices of the two hypergraphs, and the graph comparison process is carried out on the aligned adjacency matrices. For instance, when comparing networks of mobile phone calls over a period of time (e.g. to screen out abnormal call activities or airtime usage), vertex alignment can be done by uniquely identifying callers by their phone numbers. Linear computational complexity can be achieved in this case. In many applications, this is not a significant limitation. When computing hypergraph similarity, it is likely that the hypergraphs are of the same domain of discourse and one wants to understand how the hypergraph evolve and understand the dynamism of hypergraph changes. In this case, hypergraph vertices are already known and can be systematically put into a sequence, for instance, when one considers a genomes-functionality hypergraph, a phone call network, or an email communication patterns (all of which examples can be represented as a portions of hypergraph data).

In the explanation given below, it is assumed that graph entities, and hence the alignment between vertices, are known.

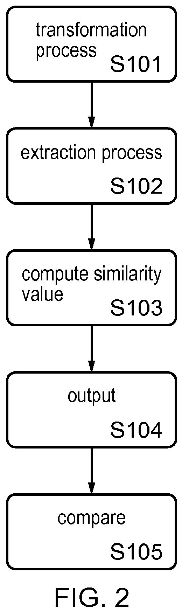

Figure 2 is a schematic diagram illustrating the flow of processing in an embodiment.

At step S101 a transformation process is applied to a first portion of hypergraph data to generate a first image, and a second portion of hypergraph data to generate a second image. The transformation process takes, as inputs, two portions of hypergraph data, transforms each portion of hypergraph data to a respective image, and outputs the respective images. The transformation process comprises extracting information from the respective portions of hypergraph data, and converting the extracted information to a position and pixel value pairing, the image being a 2-dimensional array of pixel values. The portions of hypergraph data may be entire hypergraphs.

The transformation process may include, or be preceded by, an obtaining step of obtaining the first and second portions of hypergraph data. The computer-implemented method may be a computer program that can be executed and which includes an interface for accepting inputs, or it may be that inputs, such as physical addresses of hypergraph data portions, are provided as arguments in a command line instruction (or equivalent) that initiates the method.

The computer-implemented method may include storing the data that is being processed, either until it has been processed, at which point it is discarded, or the various versions of the hypergraph data (the portion of hypergraph data, the image, and/or the feature vector) may all be retained in storage until a user directs them to either be maintained, transferred to another location, or discarded. It is noted that a user in this context is taken to be a person or entity initiating the computer-implemented method and selecting the first and second portions of hypergraph data upon which the method is to be performed.

There is no limitation on the sizes of hypergraphs and images. In practice, the hypergraphs can be stored in a distributed storage and encoded as an adjacency matrix, with each server holding a tile of the adjacency matrix.

The transformation process transforms the portion of hypergraph data into image data. There may be intermediate manifestations of the data produced during the transformation process. For example, the portions of hypergraph data, if they are not in the form of an adjacency matrix on input to the transformation process, may be converted to adjacency matrices, and then to image data.

Hypergraphs can be stored using different data structures. For instance, the hypergraph of Figure 1A may be stored as an incidence matrix as shown in Figure 1B, where rows are edges and columns are vertices, and the numbers 1 and 0 indicate the existence and absence of the corresponding vertices with respect to the given edges.

Alternatively, the cell values of the incidence matrix may be decimal numbers between 0 and 1 to signify the strength of edges. Alternatively, the cell value of an incidence matrix may be a non-zero decimal value indicating the probability of a vertex's membership with respect to the corresponding edge. Such a decimal number enriches the semantics of hypergraphs.

As mentioned above, in the explanation given below, it is assumed that graph entities are known, i.e. the column arrangement of the hypergraph incidence matrix is known. The transformation process may include converting the first and/or second portions of hypergraph data from their native encoding to an adjacency matrix, and from the adjacency matrix to image data. The images represent the respective portions of hypergraph data. Some information present in the hypergraph data, such as vertex labels, is lost in the image representation, so that the image may be considered to be extracted from, or a distillation of, the portion of hypergraph data.

The adjacency matrix includes a row and column for each hypergraph vertex. In particular an incidence matrix corresponding to a hypergraph may be converted into an adjacency matrix with both rows and columns corresponding to the hypergraph vertices. In this case cell values of the adjacency matrix are the sets of edges that the corresponding vertices are on. For example, the incidence matrix shown in Figure 1 B may be converted as shown in Figure 1C. In Figure 1C, {} indicates an empty set, and self-cycle (e.g. $v_5$ - $v_5$) is empty unless a self-cycle edge (e.g. $v_7$) is explicitly defined (as $e_5$ in the illustrated hypergraph, which is undirected).

The generated images are stored as image data. The images may be stored as raw image data, as bitmaps, or as compressed image files such as jpeg or png. The stored images may replace the respective portions of hypergraph data in storage, or may be stored in association with the respective portions of hypergraph data.

Optionally, there may be a maximum image size that the implementation is configured to accept (determined in dependence upon factors such as available processing hardware, required time to result, etc.), and that all images are increased to the maximum image size (both in training a model for feature extraction and in executing a model for feature extraction) by adding rows and columns of empty, or zero-value, pixels. In other words, the image size may be fixed, with empty pixels added to convert smaller images to the fixed image size.

Next, at step S102, an extraction process is performed on the images. The extraction process is a process applied to the images to extract respective feature vectors. The input to the extraction process is the first image and the second image, and the extraction process transforms the images to respective feature vectors as an output. The feature vectors comprise quantifiable values (i.e. numbers) for each of a common set of features. The common set of features are features of the images, and may be extracted by subjecting the images to a convolutional neural network model.

A convolutional neural network model is an exemplary model for performing the extraction process. The input data, the images, may be large in size. The convolutional neural network model effectively performs dimension reduction, reducing the image to a vector representing features of the image.

The convolutional neural network model may be a pre-trained image classification convolutional neural network model that is applied by the extraction process. The training may be performed as part of the computer-implemented method, or the training may be performed by a third party.

The feature vectors may be stored. The feature vector may replace the respective portion of hypergraph data and/or the respective image data in storage. For example, the portion of hypergraph data may be stored in association with its feature vector, so that future comparisons involving the portion of hypergraph data can be performed in the absence of the transformation and extraction processes.

At step S103, a similarity value, that is, a value representing the similarity between the first feature vector and the second feature vector is computed based on the respective quantifiable values for the common set of features. The computation may be, for example, a cosine distance computation. The output may be a value between 0 and 1, or a value scaled in some other way and representing the similarity of the two feature vectors extracted in step S102.

At step S104, the computed similarity value is output. The output may be returned to the entity initiating the computer-implemented method, or may be transmitted to a physical address specified at the initiation of the method. The output represents the similarity of the two feature vectors, and in turn therefore the similarity of the two images, and ultimately the two portions of hypergraph data. The computed similarity value may be a Boolean value, i.e., a value representing one of two options: either the portions of hypergraph data (or, more specifically, the feature vectors extracting from the images into which the portions of hypergraph data are transformed) are similar, or they are not similar. Alternatively, there may be a range of values, for example between 0 and 1, with the output similarity value being a value from the range representing the computed level of similarity.

At step S105, the computed similarity value is compared with a predetermined similarity threshold value and the result of the comparison is used to determine whether an alert indicating the comparison result should be issued. If so such an alert is issued. This step is optional, and may be omitted depending on the nature of the hypergraph data being processed, and the intended application for the computed similarity values.

For example, the first and second hypergraph data portions may be representations of messaging or communication systems, such as a telecommunication or computing network, wherein the vertices represent nodes or terminals, and the edges represent messages or data transmitted between the nodes during respective time periods. The edges may be weighted with the weight representing a number of messages or amount of data transmitted. Obtaining a similarity value enables activity in different networks to be compared, or activity in the same network during different time periods to be compared, in a computationally efficient manner. Such comparisons may be useful for pattern matching and/or identifying faults or suspect network activity. For example, a data hypergraph representing a time period may be compared with the or each data hypergraph representing one or more preceding time periods, a computed similarity value below a predefined threshold (or a computed similarity value of "no" or otherwise representing dissimilarity) for a predefined proportion or more of the one or more preceding time periods may raise an alert (for example, to a user terminal or other output destination) that unusual or abnormal activity (such as a fault or surge) took place in the time period in question.

In another example, where the first portion of hypergraph data models at least one of an observable sign of genomic functionality, a symptom of genomic abnormality, genomic structure, and genomic functionality, and where the second portion of hypergraph data models at least one of: a chemical compound, a genomic structure that can be affected by a chemical compound, and a genomic functionality associated with a genomic structure, the computed similarity value may indicate a connection between the first and second portions of hypergraph data which corresponds to identification of a chemical compound which is a candidate for use in development of a treatment targeted for a specific genomic functionality or abnormality. In this case an alert may be raised indicating that such a candidate chemical compound has been identified.

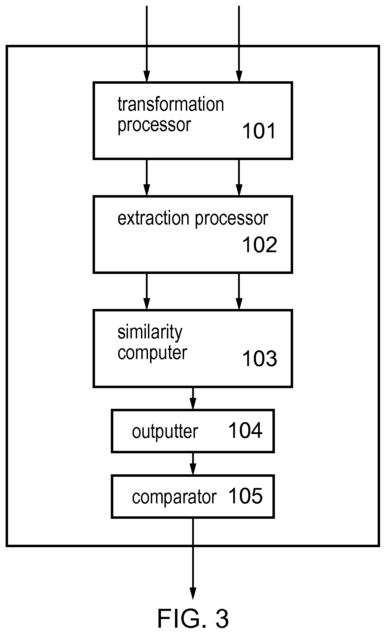

Figure 3 illustrates an apparatus of an embodiment. The apparatus comprises a transformation processor 101, an extraction processor 102, a similarity computer 103, an outputter 104 and (optionally) a comparator 105.

The transformation processor 101 is configured to receive or obtain, as inputs, a first portion of hypergraph data and a second portion of hypergraph data (as represented by the arrows directed into the transformation processor). The transformation processor 101 is configured to perform the transformation process of step S101 of Figure 1, or a transformation process as described elsewhere in this document, and thereby to generate a first image, manifest as first image data, and a second image, manifest as second image data. The outgoing arrows from the transformation processor 101 in Figure 3 represent the transfer of the first image data from the transformation processor 101 to the extraction processor 102, and the transfer of the second image data from the transformation processor 101 to the extraction processor 102.

The extraction processor 102 is configured to receive or obtain, as inputs, the first image data and the second image data. The extraction processor 102 is configured to perform the extraction process of step S102 of Figure 1, or an extraction process as described elsewhere in this document, and thereby to extract a first feature vector from the first image data and a second feature vector from the second image data. For example, the extraction processor 102 may be configured to apply an image convolutional neural network to the image data to extract the respective feature vector. The outgoing arrows from the extraction processor 102 represent the transfer of the first and second feature vectors from the extraction processor 102 to the similarity computer 103.

The similarity computer 103 is configured to receive or obtain, as inputs, the first feature vector and the second feature vector. The similarity computer 103 is configured to perform the computing a similarity value of step S103, or a procedure for computing a similarity value from two feature vectors described elsewhere in this document, and thereby to compute a similarity value representing the similarity between the first feature vector and the second feature vector. For example, the similarity computer 103 may perform a cosine distance comparison. The similarity computer 103 is configured to transfer the computed similarity value to the outputter 104.

The outputter 104 is configured to obtain or receive the computed similarity value from the similarity computer, and to output the similarity value to an output destination. The outputter 104 is configured to perform the output step at S104 of Figure 1. The output destination may be a specified storage location. Alternatively, the output location may be an apparatus or entity providing the portions of hypergraph data to the transformation processor 101.

Optional comparator 105 is configured to compare the computed similarity value with a predetermined similarity threshold value and, on the basis of the comparison result, determine whether an alert signal indicating the comparison result should be issued, and if so issue such an alert signal.

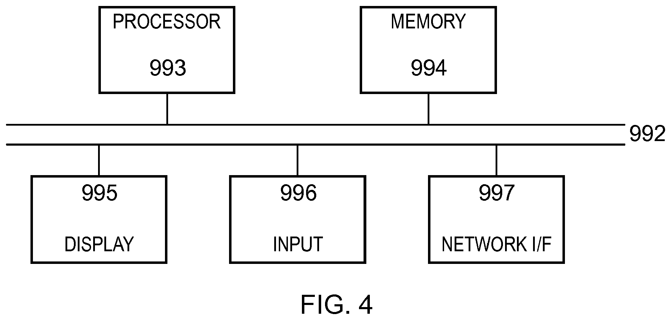

Figure 4 illustrates an exemplary system architecture underlying an apparatus of an embodiment, implementing a computer-implemented method of an embodiment, or executing a program or software of an embodiment.

The system architecture of Figure 4 is a computing device, such as a data storage server, database controller, or server. It may be that the system architecture comprises a number of such computing devices operating cooperatively.

The computing device comprises a processor 993, and memory, 994. Optionally, the computing device also includes a network interface 997 for communication with other computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations, for example, the computer-implemented method of an embodiment (such as that of Figure 2), or to operate as a functional apparatus of an embodiment (such as that of Figure 3). Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the computer-implemented method of an embodiment (for example, as illustrated in Figure 2) or to implement the various different functions of the trainer or training processor, the transformation processor 101, the extraction processor 102, the similarity value computer 103, the outputter 104 and the comparator 105, described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

The transformation processor 101 of Figure 3 may be a processor 993 (or plurality thereof) executing processing instructions (a program) stored on a memory 994 and exchanging data via a network I/F 997. In particular, the processor 993 executes processing instructions to receive, via the network I/F, or via an internal bus within the apparatus, the first and second portions of hypergraph data from an entity requiring a similarity comparison of the hypergraph data, which entity may be external to the computing device or may be a program running on the same computing device, and transform the first and second portions of hypergraph data into first and second images, as in step S101 of Figure 2. Furthermore, the processor 993 may execute processing instructions to store the images (or data encoding them) on a connected storage unit and/or to transmit, via the network I/F 997 or via an internal bus, data encoding the first image and data encoding the second image, to the extraction processor.

The extraction processor 102 of Figure 3 may be a processor 993 (or plurality thereof) executing processing instructions (a program) stored on a memory 994 and exchanging data via a network I/F 997. In particular, the processor 993 executes processing instructions to receive, via the network I/F, or via an internal bus within the apparatus, the first and second images from the transformation processor 102, and extract from the first and second images the first feature vector and the second feature vector, respectively, as in step S102 of Figure 2. Furthermore, the processor 993 may execute processing instructions to store the feature vectors (or data encoding them) on a connected storage unit and/or to transmit, via the network I/F 997 or via an internal bus, the first and second feature vectors to the similarity value computer 103.

Although not illustrated in Figures 2 & 3, the computer-implemented method of an embodiment may include a training process, and an apparatus of an embodiment may include a training processor, configured to execute the training process. The training process is described elsewhere, and is a process for training (i.e. setting values of configurable parameters in) an image classification neural network model, which model is provided to the extraction processor 102, and is executed or applied to the first and second images at the extraction processor 102 in carrying out step S102. The training processor may be a processor 993 (or plurality thereof) executing processing instructions (a program) stored on a memory 994 and exchanging data via a network I/F 997. In particular, the processor 993 executes processing instructions to receive or obtain, via the network I/F, or via an internal bus within the apparatus, a training set of image pairs, and for image pair from among the training set of image pairs, obtaining a corresponding target similarity value, and training the image classification neural network model using the training set of image pairs and target similarity values. Furthermore, the processor 993 may execute processing instructions to store the trained image classification neural network model on a connected storage unit and/or to transmit, via the network I/F 997 or via an internal bus, trained image classification neural network model to the extraction processor 102.

The similarity value computer 103 of Figure 3 may be a processor 993 (or plurality thereof) executing processing instructions (a program) stored on a memory 994 and exchanging data via a network I/F 997. In particular, the processor 993 executes processing instructions to receive, via the network I/F, or via an internal bus within the apparatus, the first and second feature vectors from the extraction processor 103, and compute a similarity value representing the similarity between the two feature vectors, as in step S103 of Figure 2. Furthermore, the processor 993 may execute processing instructions to store the computed similarity value on a connected storage unit and/or to transmit, via the network I/F 997 or via an internal bus, the computed similarity value to the outputter 104.

The outputter 104 of Figure 3 may be a processor 993 (or plurality thereof) executing processing instructions (a program) stored on a memory 994 and exchanging data via a network I/F 997. In particular, the processor 993 executes processing instructions to receive, via the network I/F, or via an internal bus within the apparatus, the computed similarity value from the similarity value computer 103, and output the computed similarity value, as in step S104 of Figure 2.

The comparator 105 of Figure 3 may be a processor 993 (or plurality thereof) executing processing instructions (a program) stored on a memory 994 and exchanging data via a network I/F 997. In particular, the processor 993 executes processing instructions to receive, via the network I/F, or via an internal bus within the apparatus, the computed similarity value from the outputter 104 or directly from the similarity value computer 103, compare the computed similarity value with a predetermined similarity threshold, determine on the basis of the result of the comparison whether an alert signal indicating the result of the comparison should be issued, and if so issue such an alert signal (either to another part of the apparatus or to equipment which is external to the apparatus of Figure 3), as in step S105 of Figure 2.

Methods embodying the present invention may be carried out on a computing device such as that illustrated in Figure 4. Such a computing device need not have every component illustrated in Figure 4, and may be composed of a subset of those components. A method embodying the present invention may be carried out by a single computing device in communication with one or more data storage servers via a network. The computing device may be a data storage itself storing the image classification convolutional neural network.

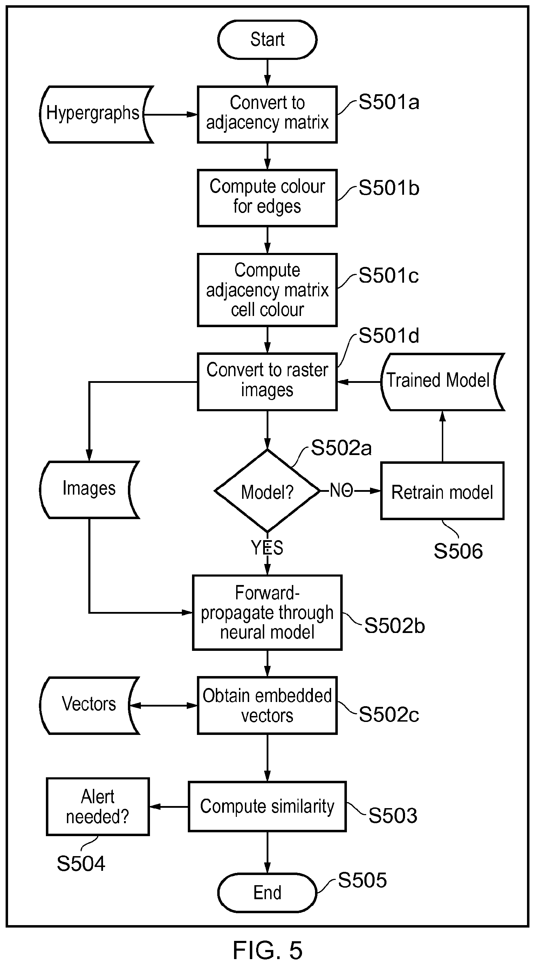

Figure 5 illustrates a method of an embodiment, the method is performed by a system, wherein the system may be, for example, an apparatus such as that illustrated in Figure 3, implemented by the hardware of Figure 4.

Steps S501 a to S501 d are an example of a transformation process such as that of step S101 of Figure 2. At step S501a, first and second hypergraphs, which are exemplary of first and second portions of hypergraph data, are loaded into the system in their native representation. The system performs processing to convert the native hypergraph representation (visualised in Figure 1A) into an adjacency matrix (visualised in Figure 1 C) as described above. For example, each vertex in the hypergraph is assigned a unique position in a first dimension, in other words, the vertices are ordered. The vertices are each assigned the same unique position in a second dimension. The adjacency matrix is a 2-dimensional matrix. Adjacency is represented by a value at the matrix entry corresponding to adjacent vertices, wherein adjacency is determined by a set of edges in the hypergraph connecting two vertices. At steps S501b and S501c, each cell of each adjacency matrix is encoded as a colour. Based on the characteristics of all the hypergraphs to be processed, the system decides a colour coding scheme for edges and computes cell colour values based on edge overlay. In the example described below, RGB colour coding is adopted. An 8 bits integer representation (with a pixel value range of 0~255) is used for each of the channels of a multichannel CNN model. This gives an overall value range of $256 \times 256 \times 256 = 16777216$, which is sufficiently large for most applications.

Firstly, at step S501b, the range of colours is stratified based on the number of edges and potentially the range of weights, if edge weight exists. If there is no edge weight, each type of edge is assigned a fixed colour code instead of a range. Three primary colour counters are used. These enable the differences between edge type colours to be maximised, thereby helping to make the combined colours for the cells more distinct. For the value range of edge weights, the colour counters are updated based on a predefined order, as explained below.

If r(W) is the range of edge weights, the colour stratification can be done as follows, where R, G, B stand for the primary colours.

1. In respective colour counters, initially set R<-0, G<-0, B<-0

2. Predefine an updated order of RGB; assume in this example the order is $R < G < B$

3. For $i$ in r(W) do: if R has not reached pixel value limit then increment R; else if G has not reached pixel value limit then increment G; else if B has not reached pixel value limit then increment B.

4. If all three colour counters have reached the pixel value limit (255), terminate.

For instance, using the adjacency matrix of Figure 1C as an example, with edge weight range set to 0 to 1 with precision to a thousandth and an increment step of 1 (i.e. incr(R) = R++), edge $e_1$ will take a colour value from $\langle B = 0, G = 0, R = 0 \rangle$, to $\langle B = 0, G = 2, R = 231 \rangle$. Alternatively, another update order, e.g. RBG, BGR, etc., can be selected. Moreover, updates can be more evenly distributed across all the colours by increasing the colour counters in turn. In practice, the increment step will be decided by the total number of edges and the full range of edge weights.

Alternatively, in order to avoid the resultant image biasing to a particular colour (in the sense that one colour is saturated before another colour is introduced), the following method can be applied. If the predefined order for the colour counters is XYZ, where X is one of the colour counters, Y is a different one of the colour counters and Z is the remaining colour counter, and each of the colours red, green and blue is represented as an **m** bits integer, where m is a positive integer selected based on a maximum pixel value for each colour, the bits representing each colour may be interlaced in turn in the predefined colour counter order so as to create a 3 times **m** bits binary number XYZ XYZ XYZ XYZ XYZ XYZ XYZ XYZ. For example, if the three primary colours are represented as an 8 bits integer, the colour bits can be arranged in intervals as BGR (for example) repeating 8 times:

$$\underbrace{BGR\ BGR\ BGR\ BGR\ ......\ BGR\ BGR\ BGR\ BGR}_{24\ bits}$$

The counter increment can then be done as in bit-wise operation of binary numbers, for example:

```
BGR BGR BGR BGR ... ...BGR BGR BGR BGR
000 000 000 000 ......000 000 000 001
000 000 000 000 ......000 000 000 010
000 000 000 000 ......000 000 000 011
                  ...
000 000 000 000 ......010 111 111 111
                  ...
```

The above counters correspond to: $\langle R = 1, G = 0, B = 0 \rangle$, $\langle R = 0, G = 1, B = 0 \rangle$, $\langle R = 1, G = 1, B = 0 \rangle$, and $\langle R = 7, G = 15, B = 7 \rangle$. In this example, again, the increment step can be used to adjust the effect of colour changing based on the number of edges and the range of edge weights. By introducing a larger increment step, the effect of colour changes becomes more prominent. For instance, by increasing the step to 3, the above colour counter updates become:

```
BGR BGR BGR BGR ... ...BGR BGR BGR BGR
000 000 000 000 ......000 000 000 001
000 000 000 000 ......000 000 000 100
000 000 000 000 ......000 000 000 111
                  ...
```

Yet, another alternative is for the user to decide the colour coding of each edge.

At step S501 c the adjacency matrix is colour coded. The colours ("colour theme") encoded for respective edges are overlaid either additively or subtractively to present the overall colour at a vertex. Assume through a systematic colour code assignment, the following edge colour theme is defined for the hypergraph of Figure 1A:

$$\begin{array}{ccccc} & & B & G & R \\ e_1 & = & 000 & 051 & 255 \\ e_2 & = & 000 & 100 & 127 \\ e_3 & = & 002 & 200 & 255 \\ e_4 & = & 015 & 255 & 127 \\ e_5 & = & 127 & 255 & 255 \end{array}$$

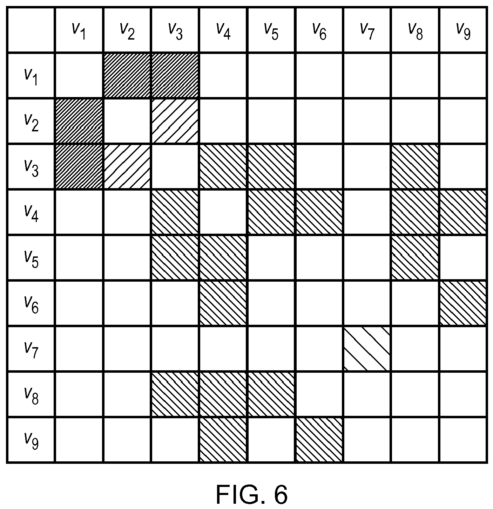

The resulting colour adjacency matrix is as shown in Figure 6.

At step S501d, the two adjacency matrices generated in steps S501 a to S501c are converted into respective RGB raster images, with the same number of channels as training data (i.e. at least three channels for individual primary colours).

At step S502a, it is determined whether a trained model for feature extraction exists and is up to date. An example of a trained model is a trained image classification convolutional neural network model.

If, at step S502a, it is determined that a trained model for feature extraction does not exist or is not up to date, then a training process is performed at step S506, which is described in more detail below.

If at step S502a it is determined that a trained model for feature extraction does exist, or once a model has been trained or retrained at step S506, then, at steps S503a and S503b, the trained model for feature extraction is applied to the first image to generate a first feature vector and applied to the second image to generate a second feature vector, and the embedded vectors obtained are stored in a dedicated vector store. In step S503c a similarity value is computed using the vectors. For example, the cosine similarity value of the two feature vectors is computed.

Step S504 is optional and may be omitted, depending on the nature of the hypergraph data being processed, and the intended application for the computed similarity values. At step S504 the computed similarity value is compared to a predetermined similarity threshold value to determine whether an alert indicating the result of the comparison should be issued and if so issuing such an alert.

The process ends at step S505.

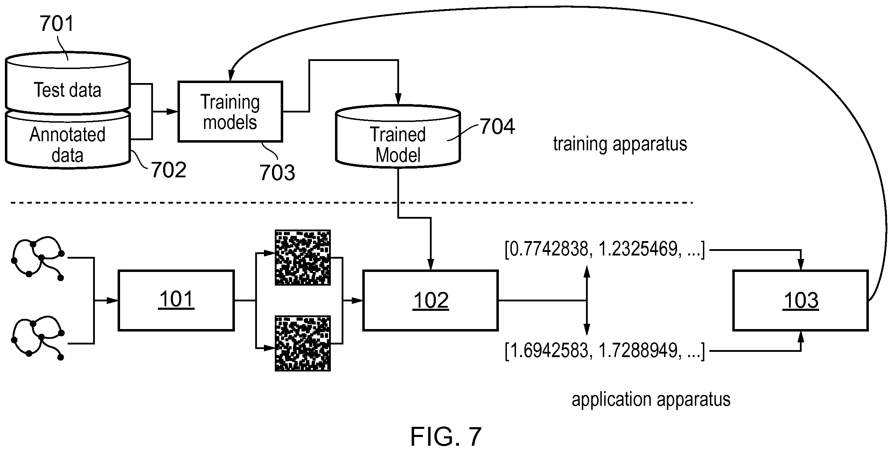

Figure 7 illustrates a system of an embodiment. The particular system of Figure 7 includes a training processor 703, which utilises test data 701 and annotated data 702 to generate a trained model for feature extraction 704 which trained model is accessible by the extraction processor 102 (referred to as a feature computation processor).

The system comprises a hardware architecture such as that illustrated in Figure 4. In particular, a processor performs the processing instructions of the training processor 703, the transformation processor 101, the extraction processor 102, and the similarity value computation processor 103. One or more storage units (memories) store the processing instructions, the trained model for feature extraction 704, the first and second portions of hypergraph data, the first and second images, and the first and second feature vectors.

Like reference numerals are assigned to the components that are in common with the components of Figure 3, and hence the discussion of said components is not repeated here. The components in common with Figure 3 101-103 are referred to as "application apparatus" in the context of Figure 7, which also includes a training apparatus 701-704, that is, an apparatus configured to perform a training process.

The training apparatus is under the control of a training processor 703, and is configured to store test data 701, annotated data 702, and a model that is being trained 704.

For example, the model being trained 704 may be an image classification convolutional neural network model. The test data 701 may be a training set of image pairs, and the annotated data 702 may be a target similarity value for each of the set of image pairs in the training set. The target similarity value is a value representing whether the corresponding pair of images can be considered similar, and may be a binary "yes" or "no", or may be a value, for example between 0 and 1, quantifying the similarity. The test data 701 and annotated data 702 may be combined in a single storage, for example, an indexed table, with each row comprising image data of each of a pair of images, and a target similarity value for the pair.

The pairs of images may be stored as raw image files (i.e. pixel value by pixel value) or stored in an image format such as tiff, jpeg, or bitmap. The indexed table may be distributed across multiple computer servers as a distributed data store.

An untrained, or not yet fully trained, image classification convolutional neural network model is stored in the storage unit 704. The training process is a backward error propagation procedure which modifies configurable parameters in the convolutional neural network. For each pair of images and corresponding target similarity value, the training processor 703 is configured to extract a feature vector from each of the pair of images by executing the stored image classification neural network model on the respective images, computing a similarity value representing the similarity between the two feature vectors in accordance with the computing a similarity value of step S103, and, if there is a difference between the computed similarity value and the target similarity value, performing backward error propagation to modify the image classification neural network model to reduce the difference, wherein the extracting, computing, and backward error propagation are performed iteratively until either a predefined maximum number of iterations is reached or the difference falls below a threshold value. Backward error propagation is carried out by observing how the error (difference) changes as a function of one or more configurable parameters, and, by addressing the configurable parameters in turn, finding values for the configurable parameters that minimise the error, wherein the error minimisation is of an aggregate error across all pairs of training images which have been used to train the convolutional neural network so far.

The training processor 703 iterates over all of the pairs of images in the test data 701, trying to find features of the images that maximise the probability of the outcome (the computed similarity value) matching the corresponding target similarity value. Errors are then back propagated to the first layer of the convolutional neural network. Errors (i.e. a difference between the target similarity value for the pair and the computed similarity value for the pair) result in the adjustment of configurable parameters (such as weighting and bias factors) in the convolutional neural network being trained. The feedback loop continues until a predefined maximum number of repetitions is reached or the errors converge to an acceptable range.

An image classification neural network model such as LeNet or AlexNet could be stored as the image classification convolutional neural network model and trained by the training processor 703. As the input image data is normally large in size, convolutional neural network models effectively perform dimension reduction, reducing the input image data to a single vector of feature values per image, representing key features of the image representation of the portion of hypergraph data.

The training can be parallelised by tiling the input images.

Training data can come from two different sources: data from public databases for generic image analysis purposes and purposely-built images based on similar hypergraphs. In particular, training data can be obtained in the following ways:

1) Reuse an existing image repository, e.g. MNist data set for digit recognition or CMU/MIT CV databases.

a. If annotated, the images from the repository can be used directly;
b. Otherwise, manually annotate pairs of images before use. Owing to the unique purpose of this image analysis task (using images for hypergraph similarity), manual image labelling is expected as public databases may not be fit for this purpose. It will usually therefore be necessary to manually annotate pair-wise hypergraph images for better results. When annotating, it is possible to use a number (e.g. similarity is "0.8753") instead of symbolic ("similar" vs. "not-similar") values.

2) Purposely built, by: generate grayscale raster images; for each image, rotate and randomly edit to produce "new" images that are considered to some extent similar to the original image; and label the original image and the edited image pair with either "T/F" or a target similarity value. For example, the target similarity value may be obtained by quantifying a degree of the editing performed to obtain the new image from the original image in the pair, and representing the degree of editing in the target similarity value. In other words, an edit distance between the two images is calculated, wherein numeric values are assigned to operations that transform the original image into the new image, and the target similarity value is the aggregation of all the operations.

Once the training processing is complete, a trained image classification convolutional neural network model is obtained, which can be applied directly to image data by the application apparatus, specifically by the extraction processor 102. Such direct application can be referred to as forward propagation.

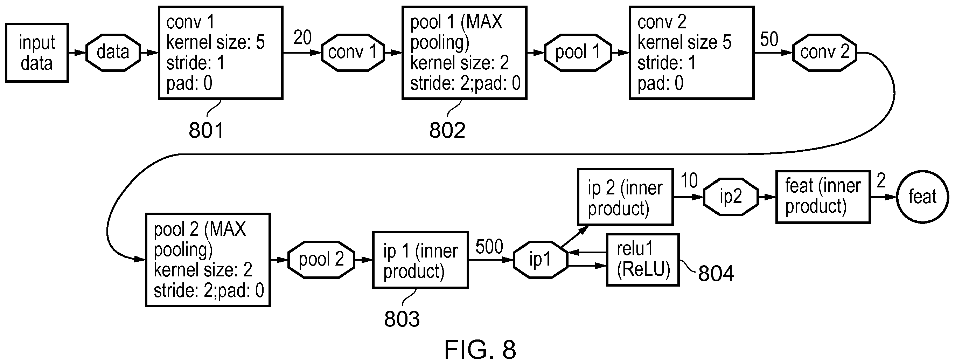

Figure 8 illustrates an example of a convolutional neural network model. At each layer of the model, there are configurable parameters (such as weights and bias factors) to be learned (i.e. configured) using the pairs of training images and target similarity values. The purpose of such parameters is to aggregate input image data through multiple levels of abstraction and projection, so that the final extracted feature vectors of images can maximise the probabilities of computed similarity values that match the target similarity values and minimise the probabilities of computed similarity values that do not match the target similarity values.

The convolutional neural network model is a multilayer neural network architecture comprising one or more convolutional layers 801 (which convolve the input image data using configurable parameters), one or more sub-sampling layers 802 (which pool spatially related values from the convolution layers), and one or more fully connected layers (inner product layers) 803. The convolutional neural network also includes a configurable ReLu layer 804, which is an activation function that configures activation functions of neurons in the network. Inner-product layers are responsible for dimension reduction that condenses the size of features that need to be represented using numeric values. The inner product layers 803 may be configured in accordance with an image size, since the inner product layers are the final layers for dimension reduction, reducing the vectors of size hundreds to a smaller number of features.

Outcome of the training is a neural network model stored in a local storage which can be applied directly in the future. The diagram of Figure 8 is an example of CNN model. At each layer of this model, there are parameters (such as weights and bias factors) to be learned using the input annotated image pairs. The purpose of such parameters is to aggregate input data through multiple levels of abstraction and projection, so the final feature vectors of images can maximise the probabilities of assigned labels and minimise the probabilities of labels not assigned to the images.

Learnt models are then verified using test data (similar to the training data in terms of format and data structure) to fine-tune the learnt parameters.

As a colour scheme is to be defined for each hyperedge, when training the neural network a multi-channel CNN model is employed, with dedicated channels for different primary colours.

**Claims**

1. A computer-implemented method, comprising:

   applying a transformation process to: a first portion of graph data to generate a first image, and a second portion of graph data to generate a second image;
   applying an extracting process to: the first image to extract a first feature vector, and the second image to extract a second feature vector; wherein both the first feature vector and the second feature vector comprise quantifiable values for each of a common set of features;
   computing a similarity value, the similarity value being a value representing the similarity between the first feature vector and the second feature vector based on the respective quantifiable values for the common set of features;
   outputting the computed similarity value; and
   comparing the computed similarity value with a predetermined similarity threshold value and, on the basis of the result of the comparison, determining whether an alert indicating the comparison result should be issued, and if so issuing such an alert;
   wherein:

   the first and second portions of graph data comprise portions of hypergraph data each comprising a plurality of vertices and a plurality of edges;
   during or at the start of the transformation process each portion of graph data is represented as an adjacency matrix, where each vertex in the respective portion of graph data is assigned a unique position in a row of the adjacency matrix and a unique position in a column of the adjacency matrix, and cells of the adjacency matrix each contain a set of edges corresponding to the vertex represented by the cell; and
   for each portion of hypergraph data the transformation process comprises encoding each cell of the adjacency matrix representing the portion of hypergraph data as a colour by:

   allocating a set of pixel values respectively representing a colour to each edge such that each edge has a different set of pixel values to the other edges, and
   specifying the colour of each cell of the adjacency matrix as an overlay, by either addition or subtraction, of the colours of each edge in the set of edges in that cell.

2. A computer-implemented method, comprising:

   applying a transformation process to: a first portion of graph data to generate a first image, and a second portion of graph data to generate a second image;
   applying an extracting process to: the first image to extract a first feature vector, and the second image to extract a second feature vector; wherein both the first feature vector and the second feature vector comprise quantifiable values for each of a common set of features;
   computing a similarity value, the similarity value being a value representing the similarity between the first feature vector and the second feature vector based on the respective quantifiable values for the common set of features; and
   outputting the computed similarity value;
   wherein:

   the first and second portions of graph data comprise portions of hypergraph data each comprising a plurality of vertices and a plurality of edges;
   during or at the start of the transformation process each portion of graph data is represented as an adjacency matrix, where each vertex in the respective portion of graph data is assigned a unique position in a row of the adjacency matrix and a unique position in a column of the adjacency matrix, and cells of the adjacency matrix each contain a set of edges corresponding to the vertex represented by the cell; and

for each portion of hypergraph data the transformation process comprises encoding each cell of the adjacency matrix representing the portion of hypergraph data as a colour by:

> allocating a set of pixel values respectively representing a colour to each edge such that each edge has a different set of pixel values to the other edges, and
>
> specifying the colour of each cell of the adjacency matrix as an overlay, by either addition or subtraction, of the colours of each edge in the set of edges in that cell.

3. The computer-implemented method of claim 2, further comprising comparing the computed similarity value with a predetermined similarity threshold value and, on the basis of the result of the comparison, determining whether an alert indicating the comparison result should be issued, and if so issuing such an alert.

4. The computer-implemented method of claim 1 or 3, wherein the first and second portions of hypergraph data model respective patterns of activity, and an alert is issued if the result of the comparison indicates that the computed similarity value is lower than the predetermined similarity threshold.

5. The computer-implemented method of claim 2, wherein:

> the first portion of hypergraph data models at least one of: (i) an observable sign of genomic functionality; (ii) a symptom of genomic abnormality; (iii) genomic structure; and (iv) genomic functionality;
>
> the second portion of hypergraph data models at least one of: (i) a chemical compound; (ii) a genomic structure that can be affected by a chemical compound; and (iii) a genomic functionality associated with a genomic structure; and
>
> the method further comprises identifying, based on the computed similarity value, a chemical compound which is a candidate for use in development of a treatment targeted for a specific genomic functionality or abnormality.

6. The computer-implemented method of claim 5, further comprising manufacturing the candidate chemical compound.

7. The computer-implemented method of any preceding claim, wherein
the plurality of edges comprise edges weighted according to a range of edge weights, and allocating a set of pixel values to each edge comprises allocating a set of pixel values to each edge according to its edge weight.

8. The computer-implemented method of claim 7, wherein colour counters are used to store a pixel value count for the colours red, green and blue respectively, and an order for the colour counters and a counter increment step are predefined.

9. The computer-implemented method of claim 8, wherein the counter increment step is predefined on the basis of the total number of edges and the range of edge weights.

10. The computer-implemented method of claim 8 or 9, wherein allocating a set of pixel values to each edge according to its edge weight comprises carrying out a pixel value increment process comprising:

> for each weight in the range of edge weights, incrementing the pixel value count in the first colour counter by the predefined increment step unless the count in the first colour counter has reached a first preset maximum pixel value, in which case incrementing the pixel value count in the second colour counter by the predefined increment step unless the count in the second colour counter has reached a second preset maximum pixel value, in which case incrementing the pixel value count in the third colour counter by the predefined increment step until the count in the third colour counter reaches a third preset maximum pixel value.

11. The computer-implemented method of claim 8 or 9, wherein allocating a set of pixel values to each edge according to its edge weight comprises carrying out a pixel value increment process comprising:

> for each weight in the range of edge weights, incrementing each of the pixel value counts in the colour counters in turn by the predefined increment step.

**12.** The computer-implemented method of claim 8 or 9, wherein allocating a set of pixel values to each edge according to its edge weight comprises carrying out a pixel value increment process comprising:

representing each of the colours red, green and blue as an m bits integer, where m is a positive integer selected based on a maximum pixel value for each colour,
interlacing the bits representing each colour in turn in the predefined colour counter order so as to create a 3 times m bits binary number, and
for each edge weight in the range of edge weights, incrementing the 3 times m bits binary number by the predefined increment step.

**13.** The computer-implemented method according to any preceding claim, wherein
each of the plurality of vertices represents an entity, and, in the adjacency matrices respectively representing the first and second graph portions, pairs of vertices, with one vertex from each of the first and second portions of graph data, which represent the same entity are assigned to equivalent unique positions in the respective adjacency matrices.

**14.** An apparatus comprising:

a transformation processor to apply a transformation process to: a first portion of graph data to generate a first image, and a second portion of graph data to generate a second image;
an extraction processor to apply an extraction process to: the first image to extract a first feature vector, and the second image to extract a second feature vector; wherein both the first feature vector and the second feature vector comprise quantifiable values for each of a common set of features;
a similarity value computer to compute a similarity value, the similarity value being a value representing the similarity between the first feature vector and the second feature vector based on the respective quantifiable values for the common set of features; and
an outputter to output the computed similarity value;
wherein:

the first and second portions of graph data comprise portions of hypergraph data each comprising a plurality of vertices and a plurality of edges;
during or at the start of the transformation process each portion of graph data is represented as an adjacency matrix, where each vertex in the respective portion of graph data is assigned a unique position in a row of the adjacency matrix and a unique position in a column of the adjacency matrix, and cells of the adjacency matrix each contain a set of edges corresponding to the vertex represented by the cell; and
for each portion of hypergraph data the transformation process comprises encoding each cell of the adjacency matrix representing the portion of hypergraph data as a colour by:

allocating a set of pixel values respectively representing a colour to each edge such that each edge has a different set of pixel values to the other edges, and
specifying the colour of each cell of the adjacency matrix as an overlay, by either addition or subtraction, of the colours of each edge in the set of edges in that cell.

**15.** Apparatus as claimed in claim 14, further comprising a comparator to compare the computed similarity value with a predetermined similarity threshold value and, on the basis of the result of the comparison, determine whether an alert signal indicating the comparison result should be issued, and if so issuing such an alert signal.

**16.** A computer program which, when executed by a computing device, causes the computing device to perform the computer-implemented method of any of claims 1 to 14.

FIG. 1A

| | $v_1$ | $v_2$ | $v_3$ | $v_4$ | $v_5$ | $v_6$ | $v_7$ | $v_8$ | $v_9$ |
|-------|----|----|----|----|----|----|----|----|----|
| $e_1$ | 1 | 1 | 1 | 0 | 0 | 0 | 0 | 0 | 0 |
| $e_2$ | 0 | 1 | 1 | 0 | 0 | 0 | 0 | 0 | 0 |
| $e_3$ | 0 | 0 | 1 | 1 | 1 | 0 | 0 | 1 | 0 |
| $e_4$ | 0 | 0 | 0 | 1 | 0 | 1 | 0 | 0 | 1 |
| $e_5$ | 0 | 0 | 0 | 0 | 0 | 0 | 0 | 0 | 1 |

FIG. 1B

| | $v_1$ | $v_2$ | $v_3$ | $v_4$ | $v_5$ | $v_6$ | $v_7$ | $v_8$ | $v_9$ |
|-------|-------|-------------|-------------|--------|--------|--------|---------|--------|--------|
| $v_1$ | {} | {$e_1$} | {$e_1$} | {} | {} | {} | {} | {} | {} |
| $v_2$ | {$e_1$} | {} | {$e_1,e_2$} | {} | {} | {} | {} | {} | {} |
| $v_3$ | {$e_1$} | {$e_1,e_2$} | {} | {$e_3$} | {$e_3$} | {} | {} | {$e_3$} | {} |
| $v_4$ | {} | {} | {$e_3$} | {} | {$e_3$} | {$e_4$} | {} | {$e_3$} | {$e_4$} |
| $v_5$ | {} | {} | {$e_3$} | {$e_3$} | {} | {} | {} | {$e_3$} | {} |
| $v_6$ | {} | {} | {} | {$e_4$} | {} | {} | {} | {} | {$e_4$} |
| $v_7$ | {} | {} | {} | {} | {} | {} | {$e_5$} | {} | {} |
| $v_8$ | {} | {} | {$e_3$} | {$e_3$} | {$e_3$} | {} | {} | {} | {} |
| $v_9$ | {} | {} | {} | {$e_4$} | { } | {$e_6$} | {} | {} | {} |

FIG. 1C

```
┌─────────────────────┐
│  transformation     │
│  process     S101   │
└─────────────────────┘
          │
          ▼
┌─────────────────────┐
│  extraction process │
│              S102   │
└─────────────────────┘
          │
          ▼
┌─────────────────────┐
│  compute similarity │
│  value       S103   │
└─────────────────────┘
          │
          ▼
┌─────────────────────┐
│  output             │
│              S104   │
└─────────────────────┘
          │
          ▼
┌─────────────────────┐
│  compare            │
│              S105   │
└─────────────────────┘
```

FIG. 2

transformation processor 101

extraction processor 102

similarity computer 103

outputter 104

comparator 105

FIG. 3

| PROCESSOR 993 | | MEMORY 994 |
|---|---|---|

992

| 995 DISPLAY | 996 INPUT | 997 NETWORK I/F |
|---|---|---|

FIG. 4

Start

Hypergraphs → Convert to adjacency matrix — S501a

Compute colour for edges — S501b

Compute adjacency matrix cell colour — S501c

Convert to raster images — S501d ← Trained Model

Images

Model? — S502a — NO → Retrain model — S506

YES

Forward-propagate through neural model — S502b

Vectors ↔ Obtain embedded vectors — S502c

Alert needed? ← Compute similarity — S503
S504

End — S505

FIG. 5

FIG. 6

FIG. 7

```
input          conv 1                       pool 1 (MAX                    conv 2
data   data    kernel size: 5    20  conv 1 pooling)          pool 1       kernel size 5    50  conv 2
               stride: 1                     kernel size: 2                 stride: 1
               pad: 0                        stride: 2;pad: 0               pad: 0
                  801                           802
```

```
                                                                ip 2 (inner    10       feat (inner   2
                                                                product)       ip2      product)          feat

         pool 2 (MAX                ip 1 (inner   500
         pooling)          pool 2   product)            ip1         relu1
         kernel size: 2                                             (ReLU)        804
         stride: 2;pad: 0
                                       803
```

FIG. 8

Europäisches
Patentamt

European
Patent Office

Office européen
des brevets

# EUROPEAN SEARCH REPORT

Application Number

EP 16 20 3305

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALZU'BI AHMAD ET AL: "Semantic content-based image retrieval: A comprehensive study", JOURNAL OF VISUAL COMMUNICATION AND IMAGE REPRESENTATION, vol. 32, 22 July 2015 (2015-07-22), pages 20-54, XP029278084, ISSN: 1047-3203, DOI: 10.1016/J.JVCIR.2015.07.012 * abstract; section 1, sections 2.2 and 2.6 * | 1-16 | INV. G06K9/68 G06K9/62 |
| A | BO HU: "Approximate graph distance with imagisation", INFORMATION INTEGRATION AND WEB-BASED APPLICATIONS AND SERVICES, ACM, 2 PENN PLAZA, SUITE 701 NEW YORK NY 10121-0701 USA, 28 November 2016 (2016-11-28), pages 115-124, XP058316282, DOI: 10.1145/3011141.3011163 ISBN: 978-1-4503-4807-2 * the whole document * | 1-16 | |
| A | BURCH MICHAEL ET AL: "A Matrix-Based Visualization for Exploring Dynamic Compound Digraphs", 2013 17TH INTERNATIONAL CONFERENCE ON INFORMATION VISUALISATION, IEEE, 16 July 2013 (2013-07-16), pages 66-73, XP032525944, ISSN: 1550-6037, DOI: 10.1109/IV.2013.8 [retrieved on 2013-11-26] * section IV, parts A to C; figure 3 * | 1-16 | |

TECHNICAL FIELDS
SEARCHED (IPC)

G06K

The present search report has been drawn up for all claims

| Place of search | Date of completion of the search | Examiner |
|---|---|---|
| The Hague | 18 May 2017 | Atmatzidis, Lazaros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 333 771 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1609871 A

- DE 102016209932